Europäisches Patentamt

European Patent Office

Office européen des brevets

(19)

(11) EP 0 696 229 B1

(12) EUROPÄISCHE PATENTSCHRIFT

(45) Veröffentlichungstag und Bekanntmachung des Hinweises auf die Patenterteilung:
02.09.1998 Patentblatt 1998/36

(21) Anmeldenummer: 94914322.6

(22) Anmeldetag: 05.05.1994

(51) Int. Cl.⁶: $B01J\ 23/28$, $B01D\ 53/56$, $B01J\ 23/22$, $B01J\ 23/16$

(86) Internationale Anmeldenummer:
PCT/DE94/00512

(87) Internationale Veröffentlichungsnummer:
WO 94/26410 (24.11.1994 Gazette 1994/26)

(54) VERFAHREN ZUR HERSTELLUNG EINES KATALYSATORS UND NACH DIESEM VERFAHREN HERGESTELLTER KATALYSATOR

PROCESS FOR MAKING CATALYSER AND CATALYSER MADE BY SAID PROCESS

PROCEDE DE FABRICATION D'UN CATALYSEUR ET CATALYSEUR REALISE A L'AIDE DUDIT PROCEDE

(84) Benannte Vertragsstaaten:
AT BE CH DE DK GB IT LI NL SE

(30) Priorität: 06.05.1993 DE 4315062
02.12.1993 DE 4341160

(43) Veröffentlichungstag der Anmeldung:
14.02.1996 Patentblatt 1996/07

(73) Patentinhaber:
SIEMENS AKTIENGESELLSCHAFT
80333 München (DE)

(72) Erfinder:
• HUMS, Erich
D-91056 Erlangen (DE)

• KOTTER, Michael
D-76646 Bruchsal (DE)
• WEYLAND, Friedrich
D-69168 Wiesloch (DE)

(56) Entgegenhaltungen:
EP-A- 0 375 391          EP-A- 0 470 334
US-A- 3 907 833          US-A- 4 108 913

Bemerkungen:
Die Akte enthält technische Angaben, die nach dem Eingang der Anmeldung eingereicht wurden und die nicht in dieser Patentschrift enthalten sind.

Printed by Xerox (UK) Business Services
2.16.3/3.4

## Beschreibung

Die Erfindung bezieht sich auf ein Verfahren zur Herstellung eines eine katalytisch aktive Molybdän-Vanadium-Sauerstoff-Phase (Mo-V-O-Phase) enthaltenden Katalysators und auf einen nach diesem Verfahren hergestellten Katalysator. Dieser Katalysator eignet sich besonders zur katalytischen Umsetzung von in Ab- oder Rauchgas enthaltenen Stickoxiden ($NO_x$) und wird allgemein als $DeNO_x$-Katalysator bezeichnet.

Durch die europäische Patentanmeldung 91 107 237.9 ist ein arsenresistenter $DeNO_x$-Katalysator und ein Verfahren zu seiner Herstellung bekannt. Bei Anwendung des in dieser Patentschrift offenbarten Herstellverfahrens entsteht eine sauerstoffreiche Mo-V-O-Phase, die abgekühlt, vermahlen und sodann einer reduzierenden Behandlung unterworfen wird. Dabei entstehen Sauerstoff-Defektstellen. Das so gewonnene Material wird sodann gemahlen, mit Zuschlagstoffen zu einem Schlicker verarbeitet, auf einem Trägermaterial, wie zum Beispiel Streckmetall, aufgetragen und zusammen mit diesem calciniert. Der Katalysator, der nach diesem in der obigen Patentanmeldung offenbarten Verfahren hergestellt wird, zeichnet sich durch eine erhebliche Arsenresistenz und gute katalytische Aktivität bei der Reduktion der Stickoxide mit Ammoniak aus. Bei diesem Verfahren ist jedoch die Reindarstellung einer sauerstoffreichen oder sauerstoffarmen Mo-V-O-Phase praktisch nur mit unverhältnismäßig hohem Aufwand möglich. Wird dieser Aufwand nicht getrieben, so können z.B. $V_2O_5$-Ausscheidungen unerwünschte Nebenreaktionen katalysieren. So ist es beispielsweise bekannt, daß $V_2O_5$ außer der erwünschten katalytischen Aktivität bei der Reduktion der Stickoxide mit $NH_3$ auch eine unerwünschte katalytische Aktivität bei der $SO_2$-$SO_3$-Konversion entfaltet, die zur Bildung von Ammoniumsulfat und/oder Ammoniumhydrogensulfat und bei Unterschreitung des Taupunktes der genannten Sulfate zu einer allmählichen Verstopfung nachgeschalteter Bauelemente durch das Ammoniumsulfat und/oder das Ammoniumhydrogensulfat führt.

Der Erfindung liegt daher die Aufgabe zugrunde, ein Verfahren anzugeben, wie ein Katalysator mit einer katalytisch aktiven Mo-V-O-Phase hergestellt werden kann, der in hinreichend reiner Form anfällt, so daß aufwendige Nachreinigungen der katalytischen Substanz entbehrlich werden. Ferner liegt der Erfindung die Aufgabe zugrunde, einen nach diesem Verfahren hergestellten Katalysator anzugeben.

Bezüglich des Verfahrens wird diese Aufgabe erfindungsgemäß dadurch gelöst, daß Vanadiumoxid $V_2O_5$ und Molybdänoxid $MoO_3$ oder ihre Vorläufer miteinander vermischt werden, die Mischung zur Erzeugung einer Mo-V-O-Phase auf eine Temperatur über 500 °C aufgeheizt, die erzeugte Mo-V-O-Phase abgekühlt, gemahlen und danach einer reduzierenden Behandlung unterworfen wird, wobei Vanadiumoxid $V_2O_5$ und Molybdänoxid $MoO_3$ oder ihre Vorläufer miteinander in einem Verhältnis von 0,7 : 1 Gew.-% bezogen auf $V_2O_5$ und $MoO_3$ oder mit einem höheren Anteil an $MoO_3$ vermischt werden, die gemahlene Mischung nach der reduzierenden Behandlung zu einer sauren Suspension verarbeitet, auf einem auf eine Temperatur von 250 bis 600 °C erhitzten oxidischen Träger dispergiert, und sodann das dispergierte Material gemahlen und gegebenenfalls zusammen mit weiteren Zuschlagstoffen auf einem geeigneten makroskopischen Träger aufgetragen oder zu einer extrudierbaren Masse verknetet und extrudiert wird und abschließend calciniert wird.

Dieses Verfahren führt ohne weiteres und vor allem ohne besondere zwischengeschaltete Reinigungsschritte zu einer reinen Mo-V-O-Phase, die z.B. nach dem Auftragen auf einen geeigneten makroskopischen Träger auf diesem fest aufsinterbar ist. Bei diesem Verfahren ist die entstehende Mo-V-O-Phase gänzlich frei von Vanadiumoxid.

Bezüglich des Katalysators wird die genannte Aufgabe erfindungsgemäß dadurch gelöst, daß eine katalytisch aktive Mo-V-O-Phase vorgesehen ist, wobei der Anteil an freiem $V_2O_5$ unter 0,05 Gew.-% liegt. Diese Reinheit des Katalysators verhindert es, daß unerwünschte Nebenreaktionen katalysiert werden.

Wird in einer sauren Suspension gearbeitet, ist es möglich, eine Zersetzung der Mo-V-O-Phase bei der nachfolgenden Verarbeitung weitgehend zu vermeiden. Es wurde nämlich gefunden, daß z.B. das Extrudieren von wabenförmigen Katalysatoren mit hohen Zelldichten es erfordert, der katalytisch aktiven Mo-V-O-Phase Zuschlagstoffe hinzuzufügen, die die Mischung alkalisch machen. Des weiteren hat es sich aber gezeigt, daß die auf den erhitzten oxidischen Träger dispergierte Mo-V-O-Phase während dieses Vorganges gegen eine Zersetzung im alkalischen Bereich empfindlich ist. Eine saure Suspension, die beispielsweise durch die Verwendung von saurem Titanoxid erreicht werden kann, schafft daher die Voraussetzung dafür, daß bei der anschließenden Weiterverarbeitung der katalytisch aktiven Mo-V-O-Phase im Alkalischen gearbeitet werden kann, ohne die nun auf den oxidischen Träger dispergierte Mo-V-O-Phase zu zersetzen.

Eine vorteilhafte Weiterbildung bezüglich des Verfahrens besteht darin, die gemahlene Mo-V-O-Phase in der sauren Suspension bereits mit dem oxidischen Träger zu vermischen und dadurch auf diesem zu dispergieren.

In besonders vorteilhafter Weiterbildung der Erfindung kann die gemahlene Mo-V-O-Phase vor dem Dispergieren in einem geeigneten Dispergierungsmittel aufgeschlämmt und in dieser Form auf den erhitzten oxidischen Träger aufgebracht werden. Dabei kann Wasser als Dispergierungsmittel eingesetzt werden. Dieses verdampft zusammen mit anderen Verunreinigungen, wie zum Beispiel $MoO_3$ beim Auftreffen auf den heißen oxidischen Träger und läßt die Mo-V-O-Phase allein auf dem oxidischen Träger dispergieren. Die verdampften Verunreinigungen können mit dem Abgas fortgetragen werden.

In Ausgestaltung der Erfindung kann die gemahlene Mo-V-O-Phase vor der Aufschlämmung in einem geeigneten Dispergierungsmittel einer reduzierenden Behandlung unterworfen werden. Dies hat zur Folge, daß die die katalytische Aktivität maßgeblich beeinflussenden Sauerstoffdefektstellen in der Mo-V-O-Phase bereits vor dem Dispergieren in der gewünschten Dichte vorhanden sind. Diese reduzierende Behandlung bewirkt zusätzlich, daß allenfalls vorhandene Spuren von $V_2O_5$ mit reduziert werden. In der niedrigen Oxidationszahl vermag aber das Vanadiumoxid die unerwünschte $SO_2$-$SO_3$-Konversion nicht mehr zu katalysieren.

In einer anderen Ausgestaltung der Erfindung kann die gemahlene Mo-V-O-Phase beim Dispergieren auf einen oxidischen Träger einer reduzierenden Behandlung unterworfen werden. Damit ist der Vorteil verbunden, daß beide Arbeitsgänge, die reduzierende Behandlung und die Dispersion auf einen oxidischen Träger, in einem einzigen Arbeitsgang zusammengefaßt werden können. Aber auch bei der Dispersion eines bereits vorher einer reduzierenden Behandlung unterworfenen Materials wirkt sich die reduzierende Behandlung insoweit weiter positiv aus, als sie eine erneute Oxidation dieses Materials verhindert.

Es empfiehlt sich, den oxidischen Träger bei der Dispersion nicht über 600 °C zu erhitzen. Eine Erhitzung über 600 °C kann zu einem teilweisen Zerstören der Mo-V-O-Phase und Rückbildungen von Vanadiumoxid und Molybdänoxid führen.

Es hat sich als recht zweckmäßig erwiesen, wenn die Mo-V-O-Phase in Weiterbildung der Erfindung in einem Wirbelreaktor auf einen staubförmigen oxidischen Träger dispergiert wird. In diesem Fall kann die aufgeschlämmte Mo-V-O-Phase direkt in einen Wirbelreaktor eingegeben werden, in dem der oxidische Träger in einem heißen Wirbelgas, welches ein reduzierendes Gas sein kann, aufgewirbelt wird. So läßt sich in einem einzigen Arbeitsgang eine reine dispergierte Mo-V-O-Phase erzeugen, die teilweise Sauerstoffdefektstellen aufweist, während Verunreinigungen mit dem heißen Wirbelgas fortgetragen werden. Darüber hinaus verhindert die Wirbelschicht ein Agglomerieren der staubförmigen Partikel.

Alternativ kann in einer anderen Weiterbildung der Erfindung vor dem Dispergieren der Mo-V-O-Phase diese zusammen mit oxidischem Träger in einem Dispergierungsmittel aufgeschlämmt werden. Hierdurch wird die Voraussetzung dafür geschaffen, daß der Niederschlag auf einem anderen aufgeheizten Träger, der kein oxidischer Träger sein muß, erfolgen kann.

Welche Phase bei der Dispergierung letztendlich entstanden ist, hängt von der Temperatur des erhitzten oxidischen Trägers ab. Bei relativ niedriger Temperatur liegt eher die binäre Mo-V-O-Phase vor, und bei demgegenüber relativ hoher Temperatur ist bei Verwendung eines Titanoxid-Trägers die Bildung einer ternären Mo-V-Ti-O-Phase vorstellbar.

Es hat sich als besonders vorteilhaft erwiesen, daß die katalytische Aktivität für die Reduktion von Stickoxiden am Katalysator im Temperaturbereich über 420 °C keine Verringerung erfährt. Dies wurde möglich, weil der Katalysator frei von $V_2O_5$ ist. Denn dieses katalysiert im Temperaturbereich ab ca. 420 °C die Oxidation von $NH_3$ mit Sauerstoff und verringert dadurch die gewünschte Reduktion der Stickoxide mit $NH_3$, mit der sie in Konkurrenz tritt. Das ermöglicht es, den Katalysator auch vorteilhaft hinter Verbrennungsanlagen einzusetzen, die diskontinuierlich arbeiten und bei denen daher die katalytische Aktivität über sehr große Temperaturbereiche möglichst gleichmäßig eingehalten werden soll.

Ein wabenförmiger Katalysatorkörper mit hoher Zelldichte ist herstellbar, wenn als Zuschlagstoffe eine oder mehrere der Substanzen polares Lösungsmittel, nicht-polares Lösungsmittel, Ammoniak, Porenbildner, Tonminerale, Filmbildehilfsmittel und Füll-/Stützmittel verwendet werden.

Wabenförmige Katalysatorkörper mit besonders hoher Zelldichte sind herstellbar, wenn als weiterer Zuschlagstoff ein nicht ionogenes Verdickungsmittel auf Polyurethanbasis verwendet wird. Ein solches Verdickungsmittel bewirkt eine Stabilisierung einer extrudierbaren Knetmasse und verbessert die Fließeigenschaften der Knetmasse.

Zur Verbesserung der Härte der Wandungen der wabenförmigen Katalysatoren ist es vorteilhaft, wenn die extrudierten Formkörper getrocknet und vor dem Kalzinieren in einer $SO_2$- und/oder $SO_3$-Atmosphäre bei 400 bis 600 °C gehärtet werden. Bei diesem Verfahrensschritt wandelt sich ein Teil des im extrudierten Formkörper enthaltenen Titandioxids in gipsähnliches Titansulfat um, was die Steigerung der Härte bewirkt.

Ausführungsbeispiele der Erfindung werden anhand einer Zeichnung näher erläutert. Dabei zeigen:

Figur 1      ein vereinfachtes Blockschaltbild für die Herstellung eines Katalysators;

Figur 2      eine Variante für die im Blockschaltbild gemäß Figur 1 gezeigte Dispergiervorrichtung;

Figur 3      ein vereinfachtes Blockschaltbild für die Herstellung eines wabenförmigen Katalysators; und

Figur 4      einen nach dem vereinfachten Blockschaltbild gemäß Figur 3 hergestellten Wabenkatalysator.

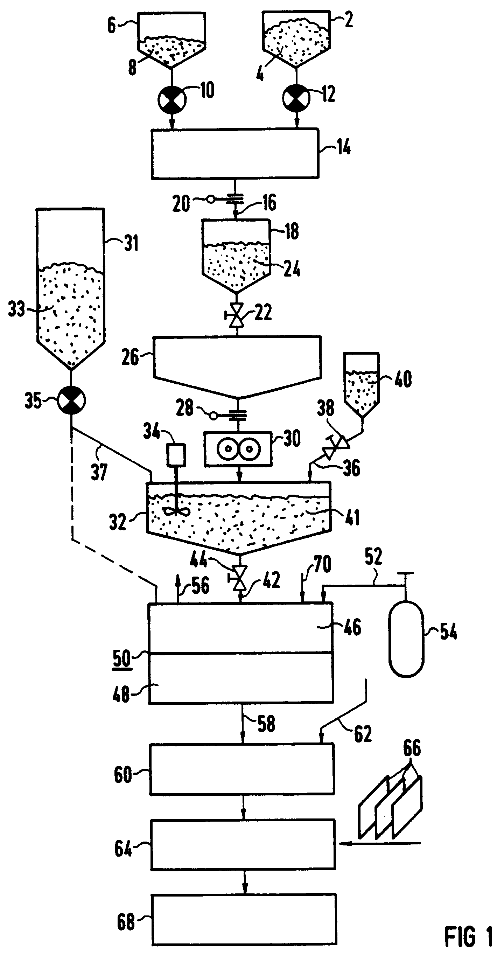

In der Figur 1 erkennt man oben einen Vorratsbehälter 2 für Vanadiumoxid 4 und daneben einen Vorratsbehälter 6 für Molybdänoxid 8. Beide Vorratsbehälter 2, 6 sind über je eine Dosiereinrichtung 10, 12 an einen Mischer 14 angeschlossen. Der Mischer 14 ist über eine Abzugsleitung 16 mit einer Schmelzvorrichtung 18 verbunden. In der Abzugsleitung 16 befindet sich ein Verschlußschieber 20. Am unteren Ende der Schmelzvorrichtung ist ein Auslaßventil 22 vorgesehen, über das die Schmelze 24 in ein Abkühlbecken 26 gelassen werden kann. Das Abkühlbecken ist über einen weiteren Verschlußschieber 28 an ein Mahlwerk 30 angeschlossen, wobei das Mahlwerk sein Mahlgut in ein Rührbecken 32 entlädt. Im Rührbecken 32 erkennt man ein Rührwerk 34. Am Rührbecken ist eine Zulaufleitung 36 mit einem Dosierventil 38 für ein Dispergiermittel 40, im Ausführungsbeispiel Wasser, angeschlossen. Außerdem ist an dem Rührbecken 32 ein Vorratsbehälter 31 für $TiO_2$ 33 über eine mit einer Dosiervorrichtung 35 ausgestattete Zuführungsleitung 37 angeschlossen. An der tiefsten Stelle des Rührbeckens 32 ist eine Ablaßleitung 42 vorgesehen, die über ein Dosierventil 44 zu einer Dispergiervorrichtung 46 führt. Die Dispergiervorrichtung 46 ist im Ausführungsbeispiel der Figur 1 mit einer Mahlvorrichtung 48 zusammengefaßt und in einem gasdichten Gehäuse 50 eingebaut. Dieses Gehäuse ist über eine separate Gasleitung 52 an einen Gasbehälter 54 für ein reduzierendes Gas, im Ausführungsbeispiel Wasserstoffgas - es könnte auch ein Kohlenwasserstoff, Kohlenmonoxid oder dergleichen sein - angeschlossen. Das Gehäuse 50 der Dispergiervorrichtung enthält außerdem eine Abgasleitung 56. Die Mahlvorrichtung 48 ist über eine Abzugsleitung 58 an einen Mischer 60 angeschlossen, an dem über eine weitere Zuführungsleitung 62 diverse Zuschläge zugemischt werden können.

An den Mischer 60 schließt sich eine Aufwalzvorrichtung 64 an, in der zugeführte makroskopische Träger 66, vorzugsweise aus Streckmetall, mit aus dem Mischer stammendem Material beschichtet werden können. An diese Aufwalzvorrichtung 64 schließt sich ein Sinterofen 68 an.

Die Herstellung eines eine katalytisch aktive Mo-V-O-Phase enthaltenen Katalysators erfolgt nun in der Weise, daß über die beiden Dosiervorrichtungen 10, 12, im Ausführungsbeispiel Vanadiumoxid 4 und Molybdänoxid 8, im Verhältnis von 0,7 : 1 Gew.-% in den Mischer 14 eindosiert und dort mehrere Stunden lang intensiv vermischt werden. Die fertige, das heißt die hinreichend gleichmäßig vermischte Masse wird sodann über den Verschlußschieber 20 und die Abzugsleitung 16 diskontinuierlich, das heißt in einzelnen Chargen, in die Schmelzvorrichtung eingeführt und dort bei einer Temperatur von etwa 600 °C, vorzugsweise bei 620 °C, aufgeschmolzen. Bei diesem Schmelzvorgang bildet sich bei einer Temperatur oberhalb von 600 °C eine Mo-V-O-Phase, der man die Formal $V_xMo_yO_{32}$ zuordnen kann, wobei $x + y \leq 12$ und $x \geq 1$ und $y \geq 1$ sind. Diese Mo-V-O-Phase ist jedoch nicht frei von ursprünglich im Überschuß eingesetztem $MoO_3$. Molybdänoxid bzw. sein Vorläufer wurden im Überschuß eingesetzt, um zuverlässig alles Vanadiumoxid in die Mo-V-O-Phase einzubinden und freies $V_2O_5$ zu vermeiden. Diese Schmelze 24 wird nach dem vollständigen Aufschmelzen und einer Verweilzeit von etwa 15 Min. Dauer bei einer Temperatur oberhalb 610 °C in ein Abkühlbecken 26 abgelassen. In diesem Abkühlbecken bilden sich infolge des Abschreckeffekts Flakes. Diese werden nunmehr über ein Mahlwerk 30 auf einen Korndurchmesser kleiner 180 μm heruntergemahlen, und das Pulver wird sodann in ein Rührbecken 32 befördert. Dem Rührbecken wird außerdem ein Dispergiermittel 40, vorzugsweise Wasser, zugegeben, so daß sich eine fließfähige Aufschlämmung 41 ergibt. Außerdem wird dem Rührbecken 32 über die Zuführungsleitung 37 eine dosierte Menge eines oxidischen Trägers, im Ausführungsbeispiel $TiO_2$-Pulver, zugeführt und die Masse anschließend intensiv mittels des Rührwerkes 34 vermischt. Mit der so erzeugten Aufschlämmung wird in kontinuierlichem Zustrom die Dispergiervorrichtung 46 beaufschlagt.

Als Dispergiervorrichtung 46 ist im Ausführungsbeispiel der Figur 1 eine Kugelmühle verwendet, deren Kugeln aus einem sehr harten Material bestehen. Die Kugeln werden im Ausführungsbeispiel auf eine Temperatur von 450 °C erwärmt. Dies geschieht durch Anblasen der Kugeln mit dem in einer hier nicht weiter dargestellten Heizvorrichtung aufgeheizten reduzierenden Gas mit dem das Gehäuse 50 der Dispergiervorrichtung erfüllt ist. Dieses Gas ist im Ausführungsbeispiel Wasserstoffgas. Es kann aber auch Kohlenmonoxid oder ein anderer Kohlenwasserstoff sein. Beim Auftropfen der Aufschlämmung auf die heißen Kugeln der Kugelmühle schlägt sich die Aufschlämmung, das heißt die mit $TiO_2$ vermengte Mo-V-O-Phase unter der Temperatureinwirkung auf den heißen Kugeln nieder, wobei die Mo-V-O-Phase auf dem $TiO_2$-Pulver dispergiert und das Dispergierungsmittel sowie gegebenenfalls vorhandene andere Verunreinigungen, wie zum Beispiel $MoO_3$, verdampfen. Letztere gelangen über die Abzugsleitung 56 ins Freie bzw. in eine Rückgewinnungsanlage (nicht dargestellt). Das ursprünglich in geringeren Mengen der Mo-V-O-Phase beigemischte $MoO_3$ bildet mit dem Wasserdampf Hydroxide, die flüchtig sind und mit dem Abgas über die Abgasleitung 56 entweichen. Die auf den Kugeln der Kugelmühle niedergeschlagene und auf $TiO_2$ dispergierte Mo-V-O-Phase ist daher frei von $MoO_3$ und sonstigen Verunreinigungen. Das auf den Kugeln der Kugelmühle niedergeschlagene Material ist während des Dispersionsvorgangs dem reduzierenden Angriff des Wasserstoffgases ausgesetzt. Das führt zu Fehlstellen im Sauerstoffgitter der Mo-V-O-Phase und somit letztendlich zu der erwünschten hohen katalytischen Aktivität der erzeugten Mo-V-O-Phase. Durch den gegenseitigen Abrieb der Kugeln der Kugelmühle 48 untereinander und an der Wand der Kugelmühle wird das auf den Kugeln niedergeschlagene und auf $TiO_2$ dispergierte Material von der Oberfläche dieser Kugeln abgetragen. Das abgetragene Material fällt herunter und kann über die Abzugsleitung 58 intermittierend in den nachgeschalteten Mischer 60 geleitet werden. Im Mischer 60 wird das abgetragene Material mit bekannten Zuschlägen, wie etwa Ton und organischen Gleitmitteln, zu einer knetbaren Masse vermischt. Diese wird im nachfolgenden Arbeitsschritt in der Aufwalzvorrichtung 64 auf einen makroskopischen Träger, vorzugsweise Streckmetallblech 66, aufgewalzt. Dieses so mit der katalytisch aktiven Masse beschichtete Streckmetallblech wird dann in dem nachfolgenden Sinterofen 68 zu einem gebrauchsfähigen Katalysator calciniert. Bei dem in der Kugelmühle 48 durchgeführten Vorgang entsteht neben der auf $TiO_2$ dispergierten Mo-V-O-Phase auch Mo-V-Ti-O-Mischoxid.

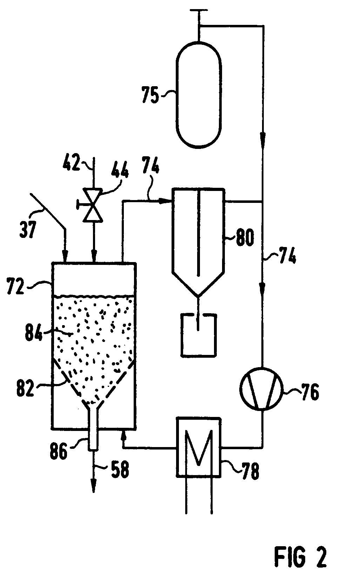

Die Figur 2 zeigt eine Variante des Ausführungsbeispiels der Figur 1. Anstelle der Dispergier- und Mahlvorrichtung 46, 48 ist ein Wirbelschichtreaktor 72 eingesetzt. In den Wirbelschichtreaktor 72 ist die Zuführungsleitung 37 des Vorratsbehälters 31 für $TiO_2$-Pulver 33 angeschlossen. An den Wirbelschichtreaktor ist außerdem eine Rezirkulationsleitung 74 mit einem Gasverdichter 76 und einer Heizvorrichtung 78 für das Kreislaufgas angeschlossen. Als Kreislaufgas wird im Ausführungsbeispiel Wasserstoffgas verwendet, das einem Gasvorratsbehälter 75 entnehmbar ist. In der Rezirkulationsleitung 74 ist eine intermittierend betreibbare Rückgewinnungsanlage 80 für die beim Dispergieren frei werdenden Substanzen integriert. Am Düsenboden 82 des Wirbelschichtreaktors ist eine Abzugsleitung 86 für die auf dem $TiO_2$-Pulver dispergierte Mo-V-O-Phase und/oder für ein mit $TiO_2$ gebildetes ternäres Mo-V-Ti-O-Mischoxid zu erkennen. Diese Abzugsleitung mündet in die Abzugsleitung 58 der Anlage gemäß der Figur 1.

Bei der Herstellung eines eine katalytisch aktive Mo-V-O-Phase enthaltenen Katalysators wird zunächst wie anhand des Ausführungsbeispiels der Figur 1 beschrieben verfahren. Abweichend hiervor wird jedoch bei der Erstellung der Aufschlämmung 41 kein $TiO_2$-Pulver zugemischt. Statt dessen wird eine vorgegebene $TiO_2$-Menge in den Wirbelschichtreaktor 72 eingegeben, nachdem der Gasverdichter 76 für das Kreislaufgas in Betrieb genommen wurde. Dabei wird das Kreislaufgas beim Durchströmen der Heizvorrichtung 78 aufgeheizt. Es strömt durch den Siebboden 82 des Wirbelschichtreaktors 72 nach oben und erzeugt ein $TiO_2$-Wirbelbett 84, welches über die mitgeführte Wärme auf 250 bis 550 ° C, im Ausführungsbeispiel auf 420° C, aufgeheizt wird. Sobald diese Temperatur des Wirbelbetts erreicht ist, wird das Ventil 44 der Ablaßleitung für die Aufschlämmung geöffnet und wird die Aufschlämmung 41 der Mo-V-O-Phase auf das Wirbelbett des Wirbelschichtreaktors aufgetropft. Dabei dispergiert die Mo-V-O-Phase auf den einzelnen $TiO_2$-Partikeln der Wirbelschicht und/oder bildet mit $TiO_2$ eine ternäre Mo-V-Ti-O-Phase. Zugleich verdampft das Wasser und andere allenfalls vorhandene Verunreinigungen, wie überschüssiges $MoO_3$, in ähnlicher Form, wie dies anhand des Ausführungsbeispiels der Figur 1 bei der dort gezeigten Dispergiervorrichtung 46 erläutert wurde. Intermittierend kann dann die Wirbelschicht mit der auf dem $TiO_2$-Pulver dispergierten Mo-V-O-Phase und/oder der Mo-V-Ti-O-Phase über die Abzugsleitung 86, 58 abgezogen werden. Die Bildung einer ternären Mo-V-Ti-Mischoxidphase hängt dabei von der Temperatur im Wirbelbett des Wirbelschichtreaktors 72 ab. Mit zunehmender Temperatur nimmt dabei der Anteil der ternären Phase auf Kosten des Anteils der binären Phase zu.

Das im Kreislauf mitgeführte Dispergiermittel, im Ausführungsbeispiel das Wasser, und die mitgeführten $MoO_3$-Anteile können sodann in der Rückgewinnungsanlage, die im wesentlichen eine Kühlfalle darstellt, auskondensieren und zurückgewonnen werden. Anschließend kann der Wirbelschichtreaktor 72 erneut mit $TiO_2$-Pulver beladen werden und mit einer neuen Charge der Aufschlämmung beschickt werden. Die weiteren Arbeitsschritte sind dann wieder identisch mit jenen, die anhand des Ausführungsbeispiels der Figur 1 beschrieben wurden.

Im Endergebnis entsteht ein Katalysator, bei dem feinste Titanoxidpartikelchen mit einer dispergierten, extrem reinen Molybdän-Vanadium-Sauerstoff-Schicht überzogen sind, deren Sauerstoffgitter einzelne Sauerstoffdefektstellen aufweist und damit hochaktiv ist. Ebenso ist hierbei eine ternäre Mo-V-Ti-Mischoxidphase mit einem Sauerstoffgitter, also von der Summenformel her eine $V_y$-$Mo_x$-$Ti_a$-$O_z$-Mischoxidphase, entstanden. Durch das Fehlen von freiem Vanadiumoxid und freiem Molybdänoxid werden unerwünschte Nebenreaktionen, wie zum Beispiel die $SO_2$-$SO_3$-Konversion, nicht mit katalysiert. Des weiteren findet kein Einbruch der katalytischen Aktivität im oberen Temperaturbereich mehr statt, weil kein freies $V_2O_5$ verfügbar ist, das $NH_3$ bei Temperaturen über 420° C konkurrierend zur $DeNO_x$-Reaktion oxidieren könnte. Anstelle von $TiO_2$ können als oxidische Träger auch $SiO_2$, $Al_2O_3$ und Tonerde oder deren Gemische eingesetzt werden.

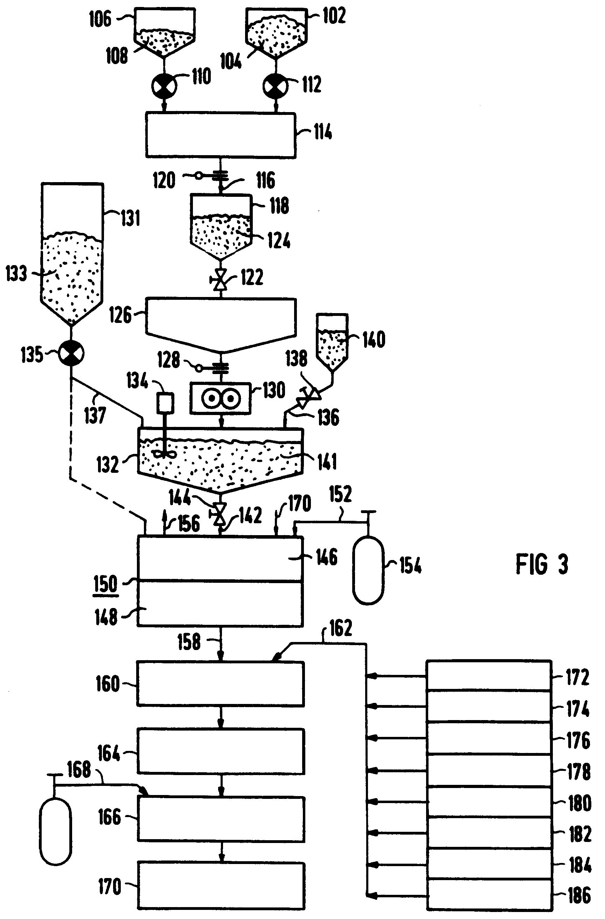

In Figur 3 erkennt man oben einen Vorratsbehälter 102 für Vanadiumoxid 104 und daneben einen Vorratsbehälter 106 für Molybdänoxid 108. Beide Vorratsbehälter 102, 106 sind über je eine Dosiereinrichtung 110, 112 an einen Mischer 114 angeschlossen. Der Mischer 114 ist über eine Abzugsleitung 116 mit einer Schmelzvorrichtung 118 verbunden. In der Abzugsleitung 116 befindet sich ein Verschlußschieber 120. Am unteren Ende der Schmelzvorrichtung 118 ist ein Auslaßventil 122 vorgesehen, über das eine Schmelze 124 in ein Abkühlbecken 126 gelassen werden kann. Das Abkühlbecken 126 ist über einen weiteren Verschlußschieber 128 an ein Mahlwerk 130 angeschlossen, wobei das Mahlwerk 130 sein Mahlgut in ein Rührbecken 132 entlädt. Im Rührbecken 132 erkennt man ein Rührwerk 134. Am Rührbecken 132 ist eine Zulaufleitung 136 mit einem Dosierventil 138 für ein Dispergiermittel 140, im Ausführungsbeispiel Wasser, angeschlossen. Außerdem ist an dem Rührbecken 132 ein Vorratsbehälter 131 für Titanoxid 133 über eine mit einer Dosiervorrichtung 135 ausgestattete Zuführungsleitung 137 angeschlossen. An der tiefsten Stelle des Rührbeckens 132 ist eine Ablaßleitung 142 vorgesehen, die über ein Dosierventil 144 zu einer Dispergiervorrichtung 146 führt. Die Dispergiervorrichtung 146 ist mit einer Mahlvorrichtung 148 zusammengefaßt und in einem gasdichten Gehäuse 150 eingebaut. Dieses Gehäuse 150 ist über eine separate Gasleitung 152 an einen Gasbehälter 154 für ein reduzierendes Gas, im Ausführungsbeispiel Wasserstoffgas - es könnte auch ein Kohlenwasserstoff, Kohlenmonoxid oder dergleichen sein - angeschlossen. Das Gehäuse 150 der Dispergiervorrichtung enthält außerdem eine Abgasleitung 156. Die Mahlvorrichtung 148 ist über eine Abzugsleitung 158 an einem Mischer 160 angeschlossen, an dem über eine weitere Zuführungsleitung 162 diverse Zuschlagstoffe zugemischt werden können. An den Mischer 160 schließt sich eine Extrudiervorrichtung 164 an, in der wabenförmige Katalysatoren extrudiert werden, die das aus dem Mischer 160 stammende Material beinhalten. An diese Extrudiervorrichtung 164 schließt sich ein gasdichter heizbarer Behälter 166 an, der über eine Gaszuführungsleitung 168 mit einer Schwefeldioxid- und/oder Schwefeltrioxid-Atmosphäre beaufschlagbar ist. Dem Behälter 166 schließt sich ein Sinterofen 170 an.

An der Zuführungsleitung 162 für Zuschlagstoffe sind parallel ein Vorratsbehälter 172 für ein polares Lösungsmittel, ein Vorratsbehälter 174 für ein nichtpolares Lösungsmittel, ein Vorratsbehälter 176 für Ammoniak, ein Vorratsbehälter 178 für einen Porenbildner, ein Vorratsbehälter 180 für Tonminerale, ein Vorratsbehälter 182 für ein Filmbildehilfsmittel, ein Vorratsbehälter 184 für Füll-/Stützmittel und ein Vorratsbehälter 186 für ein nicht-ionogenes Verdickungsmittel angeschlossen.

Die Herstellung eines eine katalytisch aktive Mo-V-O-Phase und/oder eine Mo-V-Ti-O-Phase enthaltenen Katalysators erfolgt nun in der Weise, daß über die beiden Dosiervorrichtungen 110, 112, im Ausführungsbeispiel Vanadiumoxid 104 und Molybdänoxid 108, im Verhältnis von im Ausführungsbeispiel 0,7 : 1 Gew.-% in den Mischer 114 eindosiert und dort mehrere Stunden lang intensiv vermischt werden. Die fertige, d. h. die hinreichend gleichmäßig vermischte, Masse wird sodann über den Verschlußschieber 120 und die Abzugsleitung 116 diskontinuierlich in die Schmelzvorrichtung 118 eingeführt und dort bei einer Temperatur von etwa 600 °C aufgeschmolzen. Bei diesem Schmelzvorgang bildet sich bei einer Temperatur oberhalb von 600 °C eine Mo-V-O-Phase, der man die Formel $V_xMo_yO_{32}$ zuordnen kann, wobei $x + y \leq 12$ und $x, y \geq 1$ sind. Diese Mo-V-O-Phase ist jedoch im allgemeinen nicht frei von ursprünglich im Überschuß eingesetztem Molybdäntrioxid. Molybdänoxid oder sein Vorläufer wurden im Überschuß eingesetzt, um zuverlässig alles Vanadiumoxid in die Mo-V-O-Phase einzubinden und freies Vanadinpentoxid $V_2O_5$ zu vermeiden.

Diese Schmelze 124 wird nach dem vollständigen Aufschmelzen diskontinuierlich in das Abkühlbecken 126 abgelassen. In diesem Abkühlbecken 126 bilden sich infolge des Abschreckeffekts Flocken. Diese werden nun über das Mahlwerk 130 auf einen Korndurchmesser kleiner 180 μm heruntergemahlen, und das Pulver wird sodann in das Rührbecken 132 befördert. Dem Rührbecken 132 wird außerdem ein Dispergiermittel 140, vorzugsweise Wasser oder eine schwache Säure, z.B. stark verdünnten Schwefelsäure, zugegeben, so daß sich eine fließfähige Aufschlämmung 141 ergibt. Außerdem wird dem Rührbecken 132 über die Zuführungsleitung 137 ein oxidischer Träger 133, im Ausführungsbeispiel Titanoxid-Pulver, zugeführt und die Masse abschließend intensiv mittels des Rührwerkes 134 vermischt. Um in der Aufschlämmung 141 sicher eine Zersetzung der gebildeten Mo-V-O-Phase zu vermeiden, wird im sauren Bereich gearbeitet. Zum einen kann hierzu wie oben beschrieben ein schwach saures Dispergiermittel verwendet werden, zum anderen wird aber auch nicht neutralisiertes Titanoxid aus dem Sulfat-Prozeß verwendet, das freie Schwefelsäure $(H_2SO_4)$ und auch Titanylsulfat $(TiOSO_4)$ enthält, welche in wäßriger Lösung sauer sind. Mit der so erzeugten Aufschlämmung 141 wird in kontinuierlichem Zustrom die Dispergiervorrichtung 146 beaufschlagt. Als Dispergiervorrichtung 146 ist im Ausführungsbeispiel der Figur 3 eine Kugelmühle 148 verwendet, deren Kugeln aus einem sehr harten Material bestehen. Die Kugeln werden im Ausführungsbeispiel auf eine Temperatur von 450 °C erwärmt. Dies geschieht durch Anblasen der Kugeln mit dem in einer hier nicht weiter dargestellten Heizvorrichtung aufgeheizten reduzierenden Gas, mit dem das Gehäuse 150 der Dispergiervorrichtung 146 gefüllt ist. Dieses Gas ist im Ausführungsbeispiel Wasserstoffgas. Es kann aber auch Kohlenmonoxid oder ein Kohlenwasserstoff verwendet sein. Beim Auftropfen der Aufschlämmung 141 auf die heißen Kugeln der Kugelmühle 148 schlägt sich die Aufschlämmung 141, d.h. die mit Titanoxid vermengte Mo-V-O-Phase unter der Temperatureinwirkung auf den heißen Kugeln nieder, wobei die Mo-V-O-Phase auf Titandioxid dispergiert wird. Dabei bildet sich auch eine ternäre $V_y$-$Mo_x$-$Ti_a$-$O_z$-Mischoxidphase. Das Dispergierungsmittel sowie gegebenenfalls vorhandene andere Verunreinigungen, wie z.B. noch freies Molybdäntrioxid $MoO_3$, verdampfen dabei. Letztere gelangen über die Abzugsleitung 156 ins Freie bzw. in eine Rückgewinnungsanlage (nicht dargestellt).

Das noch in geringen Mengen in der Mo-V-O-Phase befindliche beigemischte Molybdäntrioxid $MoO_3$ ist unter diesen Bedingungen wasserdampfflüchtig, d.h. es bildet mit dem Wasserdampf Hydroxide, die flüchtig sind, und wird mit dem Abgas über die Abgasleitung 156 ausgetragen.

Die auf den Kugeln der Kugelmühle 148 niedergeschlagene und nun auf Titandioxid dispergierte Mo-V-O-Phase und das ternäre Mo-V-Ti-Mischoxid sind jetzt, in Abhängigkeit von den Versuchsbedingungen, frei von Molybdäntrioxid und sonstigen Verunreinigungen. Das auf den Kugeln der Kugelmühle 148 niedergeschlagene Material ist während des Dispergierungsvorgangs dem reduzierenden Angriff des Wasserstoffgases ausgesetzt. Das führt zu Fehlstellen im Sauerstoffgitter der Mo-V-O-Phase und des ternären Mo-V-Ti-Mischoxids und somit letztendlich zu der erwünschten hohen katalytischen Aktivität der erzeugten Mo-V-O-Phase und des Mo-V-Ti-Mischoxids. Durch den gegenseitigen Abrieb der Kugeln der Kugelmühle 148 untereinander und an der Wand der Kugelmühle 148 wird das auf den Kugeln niedergeschlagene Material von der Oberfläche der Kugeln abgetragen. Das abgetragene Material fällt herunter und kann über eine Abzugsleitung 148 intermittierend in den nachgeschalteten Mischer 160 geleitet werden.

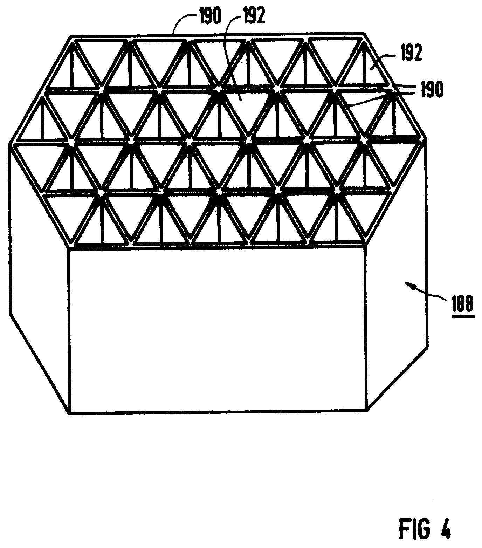

Im Mischer 160 wird das abgetragene Material, d.h. die auf Titandioxid dispergierte Mo-V-O-Phase und die Mo-V-Ti-O-Phase, mit Zuschlagstoffen zu einer knetbaren Masse vermischt, die nachfolgend in die Extrudiervorrichtung 164 gegeben wird. Der in der Extrudiervorrichtung 164 hergestellte Formkörper, beispielsweise ein sechseckiger Wabenkörper mit dreieckigen Gaskanälen (vergleiche Figur 4), wird anschließend in den beheizbaren und gasdichten Behälter 166 gebracht, in dem der Formkörper vorsichtig getrocknet und anschließend bei einer Temperatur von 450 °C in einer Schwefeldioxid- und/oder Schwefeltrioxid-Atmosphäre gehärtet werden. An diesen Härtungsvorgang schließt sich schließlich ein Kalziniervorgang in dem Sinterofen 170 an, in dem der Formkörper zu einem gebrauchsfähigen Katalysator kalziniert wird.

Weil die Aufschlämmung 141 mittels des Dispergiermittels 140 und/oder mittels des oxidischen Trägers 133 auf einen ph-Wert kleiner 7 eingestellt wird, findet in der Aufschlämmung 141 und bei dem Dispergieren der Aufschlämmung 141 keine Zersetzung der Mo-V-O-Phase statt, so daß nachfolgend im Mischer 160 im alkalischen Bereich gearbeitet werden kann, ohne die Mo-V-O Phase zu zersetzen oder freies Vanadium oder Molybdänoxid zu erzeugen.

Insbesondere für die Fertigung von Wabenkörpern mit einer hohen Zelldichte und kleinen Stegbreiten sind die über die Zuführungsleitung 162 zugemischten Zuschlagstoffe und deren Dosierung bedeutsam. Die Zusammensetzung des in der Mühle 160 vermischten Materials umfaßt in diesem Ausführungsbeispiel:

a) etwa 42 Gew.-% Titandioxid mit darauf dispergierter V-Mo-O-Phase und ternärer V-Mo-Ti-O-Phase, wobei sich ein Anteil der katalytisch aktiven Phasen im fertigen Wabenkatalysator von etwa 5 Gew.-% ergibt,
b) etwa 42 Gew.-% Wasser aus dem Vorratsbehälter 172 für ein polares Lösungsmittel, wobei der Wasseranteil im allgemeinen bei 40 bis 50 Gew.-% liegt,
c) 0,75 Gew.-% Monoethanolamin aus dem Vorratsbehälter 174 für ein nicht-polares Lösungsmittel, wobei dieser Anteil im allgemeinen zwischen 0,1 und 5 Gew.-% liegt,
d) etwa 9 Gew.-% Ammoniakwasser aus dem Vorratsbehälter 176, wobei der Ammoniakanteil im allgemeinen zwischen 5 und 15 Gew.-% liegt,
e) etwa 1 Gew.-% eines Porenbildners, der auch als Binder fungiert, wie z. B. Zellulose, Carboxylzellulose, Harze, Schellack und homopolymere Dispersionsmittel auf Polyvinylacetatbasis (Hm 105 der Firma der Elotex und/oder Acrylsäureester-Styrol-Copolymerisat), wobei dieser Anteil im allgemeinen zwischen 0,2 und 5 Gew.-% liegt,
f) etwa 2,0 Gew.-% Tonminerale, wie z. B. Montmorillonit, wobei dieser Anteil im allgemeinen zwischen 1 und 10 Gew.-% liegt,
g) etwa 0,25 Gew.-% Filmbildehilfsmittel, wie z.B. Diethylenglykolmonobutylester (Butyldiglykol), Butylglykol, Isopropanol, Ethylglykol, Polyethylenoxid, wobei dieser Anteil im allgemeinen zwischen 0,1 und 5 Gew.-% liegt,
h) etwa 2,5 Gew.-% Füll-/Stützmittel, wie z. B. Glasfasern mit einem Durchmesser von 5 bis 10 µm und einer Länge von 1 bis 6 mm, wobei dieser Anteil im allgemeinen zwischen 1 und 10 Gew.-% liegt, und
i) etwa 0,5 Gew.-% eines nicht-ionogenenen Verdickungsmittels auf Polyurethanbasis, wie z.B. Borchigel der Firma Borchers oder Collacral PU 85 der Firma BASF, wobei dieser Anteil im allgemeinen zwischen 0,1 bis 5 Gew.-% liegt.

Figur 4 zeigt einen nach dem oben erläuterten Herstellungsverfahren hergestellten Wabenkatalysator 188, dessen Stege 190 in Abhängigkeit von dem verwendeten Extrusionswerkzeug eine Wandstärke von 0,1 bis 0,6 mm aufweisen, und bei dem sich eine Anzahl Zellen 92 von 50 bis 1200 Zellen je Quadratinch einstellen läßt. Solche Wabenkatalysatoren 188, die zur Stickoxidminderung, zum Abbau von polyhalogenierten Kohlenwasserstoffen, wie z.B. Dioxinen und Furanen, und zur katalytischen Oxidation verwendet werden können, sind nur aufgrund der vorstehend beschriebenen Rezeptur herstellbar. Wie bereits oben in der Aufstellung angegeben, sind hierzu der Zusatz von Filmbildehilfsmitteln erforderlich, weil hierdurch Trocknungsrisse in der extrudierten Masse vermieden werden. Weiter sorgt das nicht ionogene Verdickungsmittel auf Polyurethanbasis für eine Stabilisierung der Knetmasse und verbessert die Fließeigenschaften der Knetmasse im Mischer 160. Das homopolymere Dispersionsmittel dient ferner als Binder und sorgt zusammen mit der Zellulose oder ähnlichen Porenbildnern für die Ausbildung einer gewünschten Porenstruktur. Aufgrund der im Behälter 166 erfolgenden Härtung, bei der der Katalysatorkörper durch eine partielle Umwandlung des Titandioxids in Titansulfate gestützt wird, ist die Haltbarkeit eines Wabenkatalysators 188 auch bei Stegbreiten bis hinunter zu 0,1 mm gegeben.

**Patentansprüche**

1. Verfahren zur Herstellung eines eine katalytisch aktive Molybdän-Vanadium-Sauerstoff-Phase (Mo-V-O-Phase) enthaltenden Katalysators, indem Vanadiumoxid $V_2O_5$ (4, 104) und Molybdänoxid $MoO_3$ (8, 108) oder ihre Vorläufer miteinander vermischt werden, die Mischung zur Erzeugung einer Mo-V-O-Phase auf eine Temperatur über 500 °C aufgeheizt, die erzeugte Mo-V-O-Phase abgekühlt, gemahlen und danach einer reduzierenden Behandlung unterworfen wird,
**dadurch gekennzeichnet, daß** Vanadiumoxid $V_2O_5$ (4, 104) und Molybdänoxid $MoO_3$ (8, 108) oder ihre Vorläufer miteinander in einem Verhältnis von 0,7 : 1 Gew.-% bezogen auf $V_2O_5$ und $MoO_3$ oder mit einem höheren Anteil an $MoO_3$ vermischt werden, die gemahlene Mischung nach der reduzierenden Behandlung zu einer sauren Suspension verarbeitet, auf einem auf eine Temperatur von 250 bis 600 °C erhitzten oxidischen Träger (33, 133) dispergiert, und sodann das dispergierte Material gemahlen und gegebenenfalls zusammen mit weiteren Zuschlagstoffen auf einem geeigneten makroskopischen Träger (66) aufgetragen oder zu einer extrudierbaren Masse verknetet und extrudiert wird und abschließend calciniert wird.

2. Verfahren nach Anspruch 1,
**dadurch gekennzeichnet, daß** die gemahlene Mo-V-O-Phase in der sauren Suspension mit dem oxidischen Träger (33, 133) vermischt und dadurch auf diesem dispergiert wird.

3. Verfahren nach Anspruch 1 oder 2,
**dadurch gekennzeichnet, daß** die gemahlene Mo-V-O-Phase vor dem Dispergieren in einem geeigneten Dispergierungsmittel (40, 140), vorzugsweise Wasser, aufgeschlämmt und in dieser Form auf den erhitzten oxidischen Träger (33, 133) aufgebracht wird.

4. Verfahren nach einem der Ansprüche 1 bis 3,
**dadurch gekennzeichnet, daß** die gemahlene Mo-V-O-Phase vor der Aufschlämmung in einem geeigneten Dispergierungsmittel (40, 140) einer reduzierenden Behandlung unterworfen wird.

5. Verfahren nach einem der Ansprüche 1 bis 4,
**dadurch gekennzeichnet, daß** die gemahlene Mo-V-O-Phase (41, 141) beim Dispergieren auf einen oxidischen Träger (33, 133) einer reduzierenden Behandlung unterworfen wird.

6. Verfahren nach Anspruch 4,
**dadurch gekennzeichnet, daß** die reduzierende Behandlung bei 250 bis 600 °C erfolgt.

7. Verfahren nach einem der Ansprüche 1 bis 6,
**dadurch gekennzeichnet, daß** die reduzierende Behandlung in einer Atmosphäre aus einem oder mehreren der Gase Wasserstoff, Kohlenmonoxid, Kohlenwasserstoffe oder Aromaten erfolgt.

8. Verfahren nach einem der Ansprüche 1 bis 7,
**dadurch gekennzeichnet, daß** die Mo-V-O-Phase in einem Wirbelschichtreaktor (72) auf einem staubförmigen oxidischen Träger (33, 133) dispergiert wird.

9. Verfahren nach einem der Ansprüche 1 bis 7,
**dadurch gekennzeichnet, daß** vor dem Dispergieren der Mo-V-O-Phase diese zusammen mit einem oxidischen Träger (33, 133) in einem Dispergierungsmittel (40, 140) aufgeschlämmt wird.

10. Verfahren nach Anspruch 9,
**dadurch gekennzeichnet, daß** die Aufschlämmung (41, 141) auf den erhitzten Kugeln einer Kugelmühle (48, 148) dispergiert wird.

11. Verfahren nach einem der Ansprüche 1 bis 10,
**dadurch gekennzeichnet, daß** der oxidische Träger (33, 133) mitsamt der darauf dispergierten Mo-V-O-Phase vermahlen wird.

12. Verfahren nach einem der Ansprüche 1 bis 11,
**dadurch gekennzeichnet, daß** als oxidischer Träger Titanoxid (33, 133) verwendet wird.

13. Verfahren nach Anspruch 12,
**dadurch gekennzeichnet, daß** bei der Dispergierung auf Titanoxid (33, 133) zumindest ein Teil der Mo-V-O-Phase in eine Mo-V-Ti-O-Phase reagiert.

14. Verfahren nach einem der Ansprüche 1 bis 11,
**dadurch gekennzeichnet, daß** als oxidischer Träger Siliziumoxid verwendet wird.

15. Verfahren nach einem der Ansprüche 1 bis 11,
**dadurch gekennzeichnet, daß** als oxidischer Träger Aluminiumoxid verwendet wird.

16. Verfahren nach einem der Ansprüche 1 bis 15,
**dadurch gekennzeichnet, daß** als oxidischer Träger Tonerde verwendet wird.

17. Verfahren nach einem der Ansprüche 1 bis 16,
**dadurch gekennzeichnet, daß** als Zuschlagstoff zumindest eine der Substanzen polares Lösungsmittel, nicht-polares Lösungsmittel, Ammoniak, Porenbildner, Tonminerale, Filmbildehilfsmittel und Füll-/Stützmittel verwendet wird.

18. Verfahren nach einem der Ansprüche 1 bis 17, **dadurch gekennzeichnet, daß** als weiterer Zuschlagstoff ein nicht-ionogenes Verdickungsmittel auf Polyurethanbasis verwendet wird.

19. Verfahren nach einem der Ansprüche 1 bis 18, **dadurch gekennzeichnet, daß** die extrudierte Masse getrocknet und vor dem Calcinieren in einer Schwefeldioxid- und/oder Schwefeltrioxid-Atmosphäre bei 400 bis 600 °C gehärtet wird.

20. Katalysator mit einer katalytisch aktiven Mo-V-O-Phase, erhältlich durch ein Verfahren gemäß einem der Ansprüche 1 bis 19, **dadurch gekennzeichnet, daß** der Anteil an freiem $V_2O_5$ (4) unter 0,05 Gew.-% liegt.

21. Katalysator nach Anspruch 20, **dadurch gekennzeichnet, daß** die katalytische Aktivität für die Reduktion von Stickoxiden im Temperaturbereich über 420 °C keine Verringerung erfährt.

22. Katalysator nach Anspruch 20 oder 21, **gekennzeichnet durch** eine auf einen makroskopischen Träger (66), vorzugsweise ein Streckmetall, ein Drahtnetz oder eine metallische oder keramische Platte, aufgesinterte Mo-V-O-Phase.

23. Katalysator (188) nach Anspruch 20 oder Anspruch 21, **gekennzeichnet durch** eine Wabenform mit einer Zelldichte von 0,7 bis 16 Zellen je $cm^2$ (5 bis 100 Zellen je Quadratinch) und einer Stegbreite von 0,35 bis 2 mm.

24. Katalysator (188) nach Anspruch 20 oder 21, **gekennzeichnet durch** eine Wabenform mit einer Zelldichte von 7 bis 186 Zellen je $cm^2$ (50 bis 1200 Zellen je Quadratinch) und eine Stegbreite von 0,1 bis 0,6 mm.

## Claims

1. Process for producing a catalyst containing a catalytically active molybdenum-vanadium-oxygen phase (Mo-V-O phase) by mixing vanadium oxide $V_2O_5$ (4, 104) and molybdenum oxide $MoO_3$ (8, 108) or their precursors with one another, heating the mixture to a temperature of over 500°C to produce an Mo-V-O phase, cooling and grinding the Mo-V-O phase produced and then subjecting it to a reducing treatment, characterized in that vanadium oxide $V_2O_5$ (4, 104) and molybdenum oxide $MoO_3$ (8, 108) or their precursors are mixed with one another in a ratio of 0.7:1% by weight based on

$V_2O_5$ and $MoO_3$, or with a higher proportion of $MoO_3$, the ground mixture is processed after the reducing treatment to form an acidic suspension, is dispersed, on an oxidic support (33, 133) heated to a temperature of 250 to 600°C, and the dispersed material is then ground and applied to a suitable macroscopic support (66) optionally together with further additives, or is kneaded to form an extrudable compound and is extruded and subsequently calcined.

2. Process according to Claim 1, characterized in that the ground Mo-V-O phase is mixed in the acidic suspension with the oxidic support (33, 133) and is thereby dispersed on the latter.

3. Process according to Claim 1 or 2, characterized in that the ground Mo-V-O phase is slurried before dispersion in a suitable dispersant (40, 140), preferably water, and is applied in this form to the heated oxidic support (33, 133).

4. Process according to any of Claims 1 to 3, characterized in that the ground Mo-V-O phase is subjected before slurrying in a suitable dispersant (40, 140) to a reducing treatment.

5. Process according to any of Claims 1 to 4, characterized in that the ground Mo-V-O phase (41, 141) is subjected to a reducing treatment during the dispersion on an oxidic support (33, 133).

6. Process according to Claim 4, characterized in that the reducing treatment is carried out at 250 to 600°C.

7. Process according to any of Claims 1 to 6, characterized in that the reducing treatment is carried out in an atmosphere of one or more of the gases hydrogen, carbon monoxide, hydrocarbons or aromatics.

8. Process according to any of Claims 1 to 7, characterized in that the Mo-V-O phase is dispersed on a dust-type oxidic support (33, 133) in a fluidized-bed reactor (72).

9. Process according to any of Claims 1 to 7, characterized in that, before the dispersion of the Mo-V-O phase, it is slurried together with an oxidic support (33, 133) in a dispersant (40, 140).

10. Process according to Claim 9, characterized in that the slurry (41, 141) is dispersed on the heated balls of a ball mill (48, 148).

11. Process according to any of Claims 1 to 10, characterized in that the oxidic support (33, 133) is ground together with the Mo-V-O phase dispersed thereon.

**12.** Process according to any of Claims 1 to 11, characterized in that titanium oxide (33, 133) is used as oxidic support.

**13.** Process according to Claim 12, characterized in that during the dispersing on titanium oxide (33, 133) at least part of the Mo-V-O phase is reacted to give an Mo-V-Ti-O phase.

**14.** Process according to any of Claims 1 to 11, characterized in that silicon oxide is used as oxidic support.

**15.** Process according to any of Claims 1 to 11, characterized in that aluminium oxide is used as oxidic support.

**16.** Process according to any of Claims 1 to 15, characterized in that argillaceous earth is used as oxidic support.

**17.** Process according to any of Claims 1 to 16, characterized in that at least one of the substances comprising polar solvent, nonpolar solvent, ammonia, pore former, clay minerals, film-forming aid and filler/stabilizer is used as additive.

**18.** Process according to any of Claims 1 to 17, characterized in that a nonionogenic thickening agent based on polyurethane is used as further additive.

**19.** Process according to any of Claims 1 to 18, characterized in that the extruded compound is dried and is hardened in a sulphur dioxide and/or sulphur trioxide atmosphere at 400 to 600°C before the calcination.

**20.** Catalyst containing a catalytically active Mo-V-O phase obtainable by a process according to any of Claims 1 to 19, characterized in that the proportion of free $V_2O_5$ (4) is below 0.05% by weight.

**21.** Catalyst according to Claim 20, characterized in that the catalytic activity for the reduction of nitrogen oxides does not undergo any reduction in the temperature range above 420°C.

**22.** Catalyst according to Claim 20 or 21, characterized by a Mo-V-O phase sintered onto a macroscopic support (66), preferably an expanded metal, a wire gauze or a metallic or ceramic plate.

**23.** Catalyst (188) according to Claim 20 or Claim 21, characterized by a honeycomb form having a cell density of 0.7 to 16 cells per $cm^2$ (5 to 100 cells per square inch) and a crosspiece width of 0.35 to 2 mm.

**24.** Catalyst (188) according to Claim 20 or 21, characterized by a honeycomb form having a cell density of 7 to 186 cells per $cm^2$ (50 to 1200 cells per square inch) and a crosspiece width of 0.1 to 0.6 mm.

**Revendications**

**1.** Procédé de fabrication d'un pot catalytique contenant une phase molybdène-vanadium-oxygène (phase Mo-V-O) active catalytiquement, qui consiste à mélanger entre eux de l'oxyde de vanadium V2O5 (4, 104) et de l'oxyde de molybdène MoO3 (8, 108) ou leurs précurseurs, à porter le mélange à une température supérieure à 500°C pour produire une phase Mo-V-O, à refroidir la phase Mo-V-O produite et à la soumettre ensuite à un traitement réducteur
caractérisé en ce qu'il consiste à mélanger l'oxyde de vanadium V2O5 (4, 104) et l'oxyde de molybdène MoO3 (8, 108) ou leurs précurseurs entre eux en un rapport de 0,7:1 en pourcentage en poids rapporté au V2O5 et au MoO3 ou avec une proportion plus grande de MoO3, à transformer le mélange broyé après le traitement réducteur en une suspension acide, à la disperser sur un support (33, 133) oxydé porté à une température de 250 à 600°C, et ensuite à broyer la matière dispersée et le cas échéant à la déposer en même temps que d'autres additifs sur un support (66) macroscopique approprié ou à la malaxer en une composition pouvant être extrudée et à l'extruder, et enfin à la calciner.

**2.** Procédé selon la revendication 1,
caractérisé en ce qu'il consiste à mélanger la phase Mo-V-O broyée de la suspension acide au support (33, 133) oxydé et ainsi à la disperser sur celui-ci.

**3.** Procédé selon la revendication 1 ou 2,
caractérisé en ce qu'il consiste à mettre la phase Mo-V-O broyée avant la dispersion en suspension dans un milieu (40, 140) de dispersion approprié, de préférence l'eau, et à la déposer sous cette forme sur le support (33, 133) oxydé chauffé.

**4.** Procédé selon la revendication 1 à 3,
caractérisé en ce qu'il consiste à soumettre la phase Mo-V-O broyée avant la mise en suspension dans un agent (40, 140) de dispersion approprié à un traitement réducteur.

**5.** Procédé selon la revendication 1 à 4,
caractérisé en ce qu'il consiste à soumettre la phase Mo-V-O (41, 141) broyée lors de la dispersion sur un support (33, 133) oxydé à un traitement réducteur.

6. Procédé selon la revendication 4, caractérisé en ce qu'il consiste à effectuer le traitement réducteur entre 250 et 600°C.

7. Procédé selon l'une des revendications 1 à 6, caractérisé en ce qu'il consiste à effectuer le traitement réducteur dans une atmosphère constituée de l'un des gaz que sont l'hydrogène, le monoxyde de carbone, un hydrocarbure ou un composé aromatique ou d'un mélange de ceux-ci.

8. Procédé selon l'une des revendications 1 à 7, caractérisé en ce qu'il consiste à disperser la phase Mo-V-O dans un réacteur (72) en lit fluidisé sur un support (33, 133) oxydé sous forme pulvérulente.

9. Procédé selon l'une des revendications 1 à 7, caractérisé en ce qu'il consiste à mettre avant la dispersion de la phase Mo-V-O celle-ci en suspension en même temps qu'un support (33, 133) oxydé dans un agent (40, 140) de dispersion.

10. Procédé selon la revendication 9, caractérisé en ce qu'il consiste à disperser la suspension (41, 141) sur les boulets chauffés d'un broyeur (48, 148) à boulets.

11. Procédé selon l'une des revendications 1 à 10, caractérisé en ce qu'il consiste à broyer le support (3, 133) oxydé en même temps que la phase Mo-V-O qui y est dispersée.

12. Procédé selon l'une des revendications 1 à 11, caractérisé en ce qu'il consiste à utiliser de l'oxyde de titane (33, 133) comme support oxydé.

13. Procédé selon la revendication 12, caractérisé en ce qu'il consiste, lors de la dispersion sur de l'oxyde de titane (33, 133) à faire réagir au moins une partie de la phase Mo-V-O pour qu'elle devienne une phase Mo-V-Ti-O.

14. Procédé selon l'une des revendications 1 à 11, caractérisé en ce qu'il consiste à utiliser de l'oxyde de silicium comme support oxydé.

15. Procédé selon l'une des revendications 1 à 11, caractérisé en ce qu'il consiste à utiliser de l'oxyde d'aluminium comme support oxydé.

16. Procédé selon l'une des revendications 1 à 15, caractérisé en ce qu'il consiste à utiliser de l'argile comme support oxydé.

17. Procédé selon l'une des revendications 1 à 16, caractérisé en ce qu'il consiste à utiliser comme additif au moins l'une des substances que sont un solvant polaire, un solvant non polaire, de l'ammoniac, un agent porogène, un agent filmogène, et une charge et agent de support.

18. Procédé selon l'une des revendications 1 à 17, caractérisé en ce qu'il consiste à utiliser comme autre additif un agent épaississant non ionogène à base de polyuréthane.

19. Procédé selon l'une des revendications 1 à 18, caractérisé en ce qu'il consiste sécher la composition extrudée et à la durcir avant la calcination dans une atmosphère de dioxyde de soufre et/ou de trioxyde de soufre entre 400 et 600°C.

20. Pot catalytique ayant une phase Mo-V-O active catalytiquement obtenue par un procédé selon l'une des revendications 1 à 19, caractérisé en ce que la proportion de V2O5 libre (4) est inférieure à 0,05 % en poids.

21. Pot catalytique selon la revendication 20, caractérisé en ce que l'activité catalytique pour la réduction des oxydes d'azote ne subit pas de diminution dans un domaine de température supérieur à 420°C.

22. Pot catalytique selon la revendication 20 ou 21, caractérisé par une phase Mo-V-O frittée sur un support (66) macroscopique, de préférence sur un métal déployé, sur une toile métallique ou sur une plaque métallique ou céramique.

23. Pot catalytique (188) selon la revendication 20 ou 21, caractérisé par une forme en nid d'abeilles ayant une densité de cellules de 0,7 à 16 cellules par cm$^2$ (5 à 100 cellules par pouce carré) et une largeur des parties pleines de 0,35 à 2 mm.

24. Pot catalytique (188) selon la revendication 20 ou 21, caractérisé par une forme en nid d'abeilles ayant une densité de cellules de 7 à 186 cellules par cm$^2$ (50 à 1200 cellules par pouce carré) et par une largeur des parties pleines de 0,1 à 0,6 mm.

FIG 1

FIG 2

FIG 3

FIG 4